# EUROPÄISCHE PATENTANMELDUNG

(11) **EP 4 574 283 A2**
(43) Veröffentlichungstag der Anmeldung: **25.06.2025**
(21) Anmeldenummer: 24217982.8
(22) Anmeldetag: 06.12.2024
(51) Int. Cl.: B08B 5/00, H01R 11/30, B66F 9/06, B65G 1/04, B65G 1/06

(54) **STATION FÜR FÖRDEREINHEITEN UND SYSTEM MIT STATION**

(30) Priorität: 19.12.2023 DE 102023135879
(71) Anmelder: Deutsche Post AG, 53113 Bonn (DE); Filics GmbH, 81541 München (DE)
(72) Erfinder: Pruski, Matthäus, 53844 Troisdorf (DE); Weber, Markus, 83544 Albaching (DE); Lutzer, Johannes Julius, 85386 Eching (DE); Konrad, Robin, 81541 München (DE); Kolls, Gregor, 80807 München (DE)
(74) Vertreter: Michalski Hüttermann & Partner Patentanwälte mbB

(57) **Zusammenfassung**

Die Erfindung betrifft eine Station (2) für Fördereinheiten (30) zum Fördern von eine Stellfläche (102) für Ladegut (200) aufweisenden Ladungsträgern (100), die Station (2) aufweisend eine Kontaktierungseinrichtung (6) mit einem beweglich gelagerten Magnet-kontakt (7) zum Kontaktieren einer Fördereinheit (30) und/oder eine für eine Fördereinheit (30) vorgesehene Reinigungseinrichtung (8).

## Beschreibung

Die Erfindung betrifft eine Station für Fördereinheiten und ein System mit der Station. Die Fördereinheiten sind zum Fördern von eine Stellfläche für Ladegut aufweisenden Ladungsträgern vorgesehen bzw. ausgebildet. Bei den Ladungsträgern handelt es sich beispielsweise um Paletten. Ein bekanntes Beispiel für einen Ladungsträger ist die genormte und mehrwegfähige "Europalette".

Zum innerbetrieblichen Transport von Gütern mit Flurförderzeugen, werden regelmäßig Ladungsträger eingesetzt, welche von Flurförderzeugen unterfahren, zusammen mit den auf ihnen gelagerten Gütern angehoben und nach dem Transport am Bestimmungsort wieder abgesetzt werden können. Aus dem Stand der Technik sind verschiedene Ausprägungen von Flurförderzeugen bekannt, die vorliegend als Fördereinrichtung bezeichnet werden. So kann zwischen einteiligen und mehrteiligen Fördereinrichtungen unterschieden werden. Bei ersteren sind die den Ladungsträger unterfahrenden Abschnitte der Fördereinrichtung meist fest miteinander verbunden. Mehrteilige Fördereinrichtungen umfassen meist eine erste und eine zweite Fördereinheit, die physisch nicht miteinander verbunden sind. Fördereinrichtungen können auch hinsichtlich ihrer Betätigung unterschieden werden. Zum einen ist eine manuelle oder motorisierte Betätigung möglich, wie dies z.B. bei Handhubwagen der Fall ist, die regelmäßig zum Be- und Entladen von Lastkraftwagen eingesetzt werden. Ferner sind autonom betriebene Fördereinrichtungen bekannt.

Bei autonom betriebenen, insbesondere mehrteiligen, Fördereinrichtungen, welche zu transportierende Ladungsträger meist vollständig unterfahren, stellt das durch die entsprechenden Ladungsträger bereitgestellte Lichtraumprofil, also der für die Fördereinrichtung beim Ein- bzw. Ausfahren unter den auf dem Erdreich abgestellten Ladungsträger zur Verfügung stehende Raum einen ganz wesentlichen limitierenden Faktor dar. So müssen sämtliche für die Funktion und den Betrieb der Fördereinrichtung notwendigen Komponenten innerhalb der zur Verfügung stehenden Höhe, Breite und Länge Platz finden, wobei gegenüber dem Ladungsträger zusätzlich noch gewisse Mindestabstände in Höhe und Breite einzuhalten sind, um ein störungsfreies Ein- und Ausfahren sicherzustellen. Insbesondere die Begrenzung der Höhendimension sorgt für die meisten Nachteile bestehender Systeme, da die Anforderungen an das Gesamtsystem schwerer erreicht werden können. Das Gesamtsystem meint hier neben der Fördereinrichtung ebenso eine Station und ein IT-System, welche regelmäßig für den operativen Betrieb erforderlich sind. Um einen möglichst hohen Kundennutzen zu erzielen ist essenziell, dass das Gesamtsystem autonom - ohne Menscheneingriff - funktioniert. Demzufolge ist ein automatisches Parken an einer Station, sowie ein automatischer Auftragseingang und eine Abwicklung über ein IT-System unumgänglich.

Fördereinheiten werden typischerweise in der Station zumindest temporär geparkt. Zumeist muss eine präzise Einfahrt der Fördereinheit in die Station erfolgen. Problematisch ist bei den bekannten Stationen, dass das Einfahren in die bzw. Anfahren an die Station nicht genügend genau ist bzw. misslingt. Insbesondere wenn die Fördereinheit vom Betrieb verschmutzt ist, wird das Ein-/Anfahren erschwert, weil die Orientierung erschwert sein kann. Das kann dazu führen, dass die Fördereinheit nicht richtig in der Station angeordnet ist, so dass beispielsweise die Fördereinheit durch ihre Fehlposition eine Gefahr darstellt.

Davon ausgehend ist es die Aufgabe der Erfindung, eine Station für Fördereinheiten anzugeben, bei der die Einfahrt in die bzw. das Anfahren an die Station besser erfolgt. Insbesondere soll eine technisch verbesserte Station für Fördereinheiten angegeben werden. Insbesondere soll eine Station angegeben werden, mit der der Betrieb von Fördereinheiten verbessert wird. Es soll auch ein System in diesem Zusammenhang angegeben werden.

Diese Aufgabe wird durch den Gegenstand der unabhängigen Patentansprüche gelöst. Bevorzugte Weiterbildungen finden sich in den Unteransprüchen, der Beschreibung und den Zeichnungen.

Es wird eine Station für Fördereinheiten zum Fördern von eine Stellfläche für Ladegut aufweisenden Ladungsträgern vorgeschlagen. Die Station weist eine Kontaktierungseinrichtung mit einem beweglich gelagerten Magnetkontakt zum Kontaktieren einer Fördereinheit und/oder eine für eine Fördereinheit vorgesehene Reinigungseinrichtung auf. Die Station weist vorzugsweise eine Fördereinheitenaufnahme auf, z.B. damit eine oder mehrere Fördereinheiten an der Station andocken bzw. parken können. Magnetkontakt und/oder Reinigungseinrichtung können an der Fördereinheitenaufnahme angeordnet sein.

Es ist ein maßgeblicher Punkt der Erfindung, dass die vorbekannte Station weitergebildet wird durch einen beweglichen Kontakt, der magnetisch ausgebildet ist, um die Fördereinheit zu kontaktieren und damit Ungenauigkeiten auszugleichen. Alternativ oder ergänzend wird die vorbekannte Station weitergebildet durch eine Einheit, mit der die Fördereinheit, insbesondere eine Sensorik davon, gereinigt werden kann. Im Ergebnis führt die Erfindung zu einer zuverlässigeren Kontaktierung zwischen Fördereinheiten und Station und mithin zu einem zuverlässigeren Parken der Fördereinheiten in der Station.

Unter dem Ladungsträger ist insbesondere eine Palette zu verstehen. Der Ladungsträger weist die Stellfläche auf, um darauf etwas abzustellen. Der Ladungsträger ist regelmäßig eine Kunststoff- und/oder Holzkonstruktion. Der Ladungsträger ist typischerweise ausgebildet, um mit einem Gabelstapler gefördert zu werden. Der Ladungsträger weist regelmäßig unterseitig Freiraum und/oder Lichtraum (oder auch Lichtraumprofil bzw. Lichtraumtunnel) auf, in den eine Fördereinheit einfahren kann, um den Ladungsträger zu unterfahren, anzuheben und zu fördern.

Unter der Kontaktierungseinrichtung ist insbesondere eine Einrichtung zum elektrischen Kontaktieren zu verstehen. Ein einfaches Beispiel ist, dass die Kontaktierungseinrichtung eine Steckverbindung umfasst oder daraus besteht. Unter einem Magnetkontakt ist beispielsweise ein Kontakt zu verstehen, der magnetische Anziehungskraft zum Positionieren und/oder Halten einer Verbindung zwischen Kontakten verwendet. So kann der bewegliche Magnetkontakt sich wenigstens quer zur Verbindungsrichtung in gewissen Grenzen frei bewegen bewegen und wird von magnetischer Anziehungskraft passend in Querrichtung positioniert, wenn sich ein korrespondierender Magnetkontakt nähert. Zudem kann es sein, dass der bewegliche Magnetkontakt aufgrund von magnetischer Anziehungskraft bzw. aufgrund von der magnetischen Anziehungskraft in Verbindung bleibt, beispielsweise bis eine genügend hohe Lösekraft von der Fördereinheit eingebracht wird.

Unter der Reinigungseinrichtung ist insbesondere eine Einrichtung zum Säubern bzw. Reinigen einer Fördereinheit von Partikeln, Schmutz und dergleichen zu verstehen. Die Reinigungseinrichtung kann insbesondere Sensoren, Kameras, etc. reinigen. Beispielsweise kann eine auf eine Fördereinheit gerichtete Reinigung vorgesehen sein.

Eine in der Höhe eingeschränkte Bauweise - bei der Europalette beispielhaft maximal 10 cm - hat zur Folge, dass Fördereinheiten sehr bodennah betrieben werden. In der Praxis bedeutet Bodennähe für Fördereinheiten meist eine höhere Staubbelastung, welches zum schnelleren Zustauben der Fördereinheiten führt, zumeist also auch deren Sensoren. Dies hat zur Folge, dass sensorische Erfassung undeutlicher wird und es zu Ausfall eines Sensors kommen kann. Es besteht erhöhter Bedarf einer regelmäßigen Wartung und Reinigung des Sensors, welcher bei herkömmlichen Fördereinrichtungen manuell ausgeführt wird, den die Erfindung jedoch bedient. Hier kommt die Reinigungseinrichtung zum Einsatz. Die Reinigungseinrichtung kann mit Vorteil zyklisch, entweder digital oder physisch durch das Einfahren einer Fördereinheit in die Station, ausgelöst werden. Es entbehrt sich wenigstens teilweise eine manuelle Reinigung der Fördereinheiten.

Herkömmliche Systeme mit Fördereinheiten setzen bei der Kontaktierung vorwiegend auf induktive Systeme, welche keine genauere Positionierung erfordern. Aufgrund der äußerst kompakten Bauweise der hier betrachteten Fördereinheiten ist derzeit noch keine induktiv kontaktierende Station realisierbar. Bekannt ist eine Kontaktierung mittels Stecker. Ein derartige Verbindung benötigt wiederum ein sehr genaues Einfahren, welches bekanntermaßen über eine Fördereinheit selbst gelöst wird. Somit ist bei bekannten Lösungen die Fördereinheit für die Genauigkeit beim Anfahren an die Station selbst verantwortlich. Um diesem Aspekt entgegenzuwirken, ist vorschlagsgemäß nicht nur die Fördereinheit, sondem vor allem die Station für eine Feinpositionierung verantwortlich. Hierzu wird die Kontaktierungseinrichtung mit dem beweglich gelagerten Magnetkontakt vorgeschlagen.

In beispielhafter Ausführung ist die Station an einem Ende eines Ladungsträgers bzw. einer Palette platziert. In diesem Fall kann ein mehrstufiges Einfahrverfahren genutzt werden, um die korrekten Einfahrprozess sicherzustellen. Zunächst erkennt die Fördereinheit durch ihre Sensorik die Positionierung der Station selbst und somit auch ein Lichtraumprofil der Station bzw. des Ladungsträgers (der Tunnel zur Einfahrt in die Station). Eine weitere Feinpositionierung geht bedarfsweise von der Station aus. Einerseits sorgt eine mechanische Zentrierung innerhalb der Station für die korrekte Positionierung der Kontaktierungseinrichtung. Zusätzlich sorgt der beweglich gelagerte Magnetkontakt bzw. ein Magnetstecker, angebracht an der Station, für die finale Verbindung. Der Magnetstecker gleicht Ungenauigkeiten aus. Durch den Magnetstecker und eine mechanische Führung wird die Station multifunktional, da sie einen essentiellen Teil vom Einfahrprozess ausführt, welche durch den begrenzten Bauraum der Fördereinheiten nicht allein übernommen werden kann.

Es kann vorgesehen sein, dass die Station eine Ladestation zum Laden von Fördereinheiten ist. Die Station kann so die Funktion des Aufladens von Fördereinheiten übernehmen. Es kann ein Ladestrom mittels der Kontaktierungseinrichtung übertragbar sein. Die Station kann an einer Netzstrom-Versorgung angeschlossen bzw. anschließbar daran ausgebildet sein, beispielsweise einen Netzstecker aufweisen, insbesondere um Fördereinheiten mittels Netzstrom zu laden. Die Station kann alternativ oder ergänzend einen Energiespeicher, beispielsweise Akkumulator, aufweisen, um die in ihm gespeicherte Energie an Fördereinheiten bedarfsweise abgeben zu können.

Besonders flache Fördereinheiten haben aufgrund der eingeschränkten Nutzungsfläche an ihrer Frontseite nicht viele Möglichkeiten, Steckverbindungen zu ermöglichen. Die Erfindung hat die Wichtigkeit daran erkannt, möglichst wenig Pins/Verbinder zu haben. Insbesondere ist der bewegliche Magnetkontakt multifunktional, insbesondere mit mehr als der Ladefunktion bzw. nicht nur als Ladestecker ausgebildet. Der bewegliche Magnetkontakt kann neben dem Ladestrom auch beispielsweise Daten hinsichtlich eines Ladeprozesses austauschen, z.B. bezüglich der Kapazität eines Energiespeichers, einer Ladeleistung, einer Energiemenge und dergleichen.

Die Kontaktierungseinrichtung kann zum, z.B. kabelgebundenen, Laden und/oder Datentransfer ausgebildet sein. Die Kontaktierungseinrichtung kann zum kabelgebundenen bzw. physikalisch kontaktierenden Kontakt mit einer Fördereinheit ausgebildet sein, beispielsweise um Ladestrom und/oder Daten zu übertragen. Die Kontaktierungseinrichtung kann auch als Lade- und/oder Diagnosestecker ausgebildet sein. Beispielsweise kann die Kontaktierungseinrichtung wenigstens zwei, bevorzugt drei oder mehr, Kontakte aufweisen, um eine jeweilige Fördereinheit zu kontaktieren, mit dieser zu kommunizieren, diese zu laden, mit dieser Daten auszutauschen, von dieser Daten auszulesen und/oder an diese Befehle zu senden.

Insbesondere dient der bewegliche Magnetkontakt als Diagnosestecker, insbesondere Lade- und/oder Diagnosestecker, einer Fördereinheit bzw. für eine Fördereinheit. Eine Fördereinheit weist regelmäßig Submodule auf, beispielsweise ein Submodul zur Positionierung, ein Submodul zum Anheben von Ladungsträgern, ein Submodul zur Energieverwaltung, und/oder ein Submodul zur Motorsteuerung, etc. Eine Fördereinheit und insbesondere deren Submodule basieren regelmäßig auf CAN-Protokollen, sodass über die so vorgeschlagene Schnittstelle jedes Submodul einzeln angesprochen und diagnostiziert werden kann. Somit kann der Status jedes Moduls, beispielsweise definiert durch die Betriebsdauer, sowie einem State of Health Status, ausgelesen werden. Diese Daten können dann dazu genutzt werden, um beispielsweise Service-Intervalle der Module festzulegen. Insbesondere weist die Station bzw. Ladestation selbst eine CAN-ID auf und kann dann über den Magnetkontakt angesprochen werden.

Bei vorteilhafter Ausführung des Diagnosesteckers kann dieser dazu genutzt werden, um eine Fördereinheit mobil auszulesen und/oder dazu dienen, eine Fördereinheit manuell zu steuern, sprich Befehle an eine Steuerungseinheiten einer Fördereinheit zu senden.

In einer weiteren Ausführung der Station kann die Station selbst Software-Updates empfangen, verarbeiten und/oder diese insbesondere über den Magnetkontakt auf eine Fördereinheit überspielen. Dies hat den Vorteil, dass der gleiche Stecker bzw. die Kontaktierungseinrichtung bzw. Diagnosestecker sowie typischerweise zyklisches Ladungsintervall genutzt werden kann, regelmäßig die neuste Software auf der Fördereinheit zu haben.

Bei einer Weiterbildung der Erfindung kann die Reinigungseinrichtung eine Drucklufteinheit, eine Wischereinheit und/oder eine Bürsteinheit aufweisen. Mittels der Reinigungseinrichtung kann eine jeweilige Fördereinheit gereinigt bzw. gesäubert werden. Beispielsweise kann Schmutz entfernt werden, der durch den Betrieb in Bodennähe aufgekommen ist und sich an der Fördereinheit, insbesondere dessen Fahrwerk und/oder Sensorik, abgelassen hat. Damit kann die Fördereinheit präziser navigieren, insbesondere präziser in die Station einfahren. Die Drucklufteinheit kann zum Abgeben von Druckluft in Richtung der Fördereinheit ausgebildet sein. Die Wischereinheit kann die Fördereinheit abwischen. Die Bürsteinheit kann die Fördereinheit abbürsten. Insbesondere ist es möglich, das die Reinigungseinrichtung zur kontaktlosen (z.B. Druckluft) und/oder kontaktierenden (z.B. Wischer oder Bürste) Reinigung von einem Sensor und/oder einer Fahrmechanik einer Fördereinheit ausgebildet ist.

Es kann vorgesehen sein, dass die Reinigungseinrichtung zur Wärmeabfuhr von einer Fördereinheit, insbesondere mittels Druckluft und/oder einem Luftstrom, ausgebildet ist. Die Reinigungseinrichtung kann die Fördereinheit abkühlen, beispielsweise beim Schnelladen und/oder wenn Abwärme entsteht. Hierzu kann die Drucklufteinheit verwendet werden. Die Reinigungseinrichtung kann insbesondere Konvektion an einer Fördereinheit erzwingen. In besonders vorteilhafter Ausführung kann die Station mittels Druckluft nicht nur eine Fördereinheit oder deren Sensor(en) reinigen, sondern auch eine Fahrmechanik der jeweiligen Fördereinheit von Schmutz befreien. Zusätzlich kann die Druckluft dazu verwendet werden, um die ggf. entstandene Wärme z.B. im Schnellladeprozess abzuführen.

Es kann ein insbesondere zu einer Fördereinheitenaufnahme der Station führender Einfahrtunnel zum Einfahren einer Fördereinheit vorgesehen sein. Die Reinigungseinrichtung kann am Einfahrtunnel angeordnet sein, bevorzugt um im Vorbeifahren einer Fördereinheit die Fördereinheit zu reinigen. Es ist möglich, dass die Reinigungseinrichtung durch ein Einfahren einer Fördereinheit in eine/die Fördereinheitenaufnahme der Station und/oder in den Einfahrtunnel auslösbar ist.

Bei einer Weiterbildung der Erfindung ist eine Positioniereinrichtung zum Positionieren einer in eine/die Fördereinheitenaufnahme der Station und/oder in den Einfahrtunnel einfahrenden Fördereinheit vorgesehen. Bei der Positioniereinrichtung kann es sich um wenigstens ein Leitelement handeln, das zum Leiten bzw. Führen von einer Fördereinheit ausgebildet ist. Beispielsweise kann das Leitelement eine Flanke sein, an der eine Fördereinheit entlang schleift, um im Grunde quer zur Fahrtrichtung positioniert zu werden.

Nachteilig bei besonders kompakten und flachen Fördereinheiten ist meist der begrenzte Bauraum, welche einen Energiespeicher als auch eine Rechenleistung bzw. Rechnergröße in einer jeweiligen Fördereinheit einschränkt. In diesem Sinne wurde mit der Erfindung erkannt, dass eine Fördereinheit Rechenaufgaben, welche für den operativen Betrieb notwendig sind, an die Station auslagern kann. Die Station kann eine Recheneinheit aufweisen, insbesondere die zur Kommunikation mit einer Fördereinheit, insbesondere über die Kontaktierungseinrichtung und/oder über eine Funkverbindung, ausgebildet ist. Die Recheneinheit kann ausgebildet sein, Rechenoperationen zum Betrieb von Fördereinheiten auszuführen. Die Recheneinheit kann dazu dienen, Rechnungen auszulagern bzw. einer Fördereinheit Rechenleistung abzunehmen. Die Station ist meist an das Stromnetz dauerhaft angeschlossen und kann dadurch nahezu unbegrenzt Energie zum Berechnen komplexerer Rechenaufgaben verwenden. Falls die rechenintensiven Rechenaufgaben das Ausführen von Berechnungen z.B. mit Neuralen Netzen (AI) erfordern, kann eine GPU an der Station integriert sein, um eine mobile Komponente zu sparen. Eine Multifunktionalität der Station als lokale Recheneinheit für eine Fördereinheit bzw. mehrere Fördereinheiten kann den dauerhaften Betrieb ermöglichen, sodass keine komplexen und energieintensiven Aufgaben auf einer Fördereinheit ausgeführt werden müssen.

Meistens ist die Flächennutzung in Warenhäusern ein großes Problem, insbesondere da Logistikfläche mit einem direktem Nutzungspotential verbunden ist. Bestehende Logistikfahrzeuge und ebenfalls moderne Fördereinheiten benötigen dedizierten Platz, insbesondere an dem die Station oder auch Ladestation platziert ist und/oder um Fördereinheiten zu parken. Beispielseise wird dazu ein Parkplatz definiert, an welchem die Fördereinheiten geparkt und/oder geladen werden. Bei manuellen Fördereinheiten kann ein Ladekabel angesteckt werden. Bei autonom operierenden Systemen ist meist nicht nur eine Parkfläche notwendig, sondern ebenfalls wird Platz für eine meist gleich große, stationäre Ladestation benötigt. Hier setzt die Erfindung an und schlägt eine verbesserte Platz- und Volumennutzung vor.

Die Station kann eine Bauhöhe von 20 cm oder 10 cm oder weniger und/oder eine Baubreite von 30 cm oder 20 cm oder weniger aufweisen. Die Baubreite kann sich auf die Breite eines Lichtraumtunnels eines Ladungsträgers beziehen. Hiermit kann eine besonders kompakte Station bzw. kompaktes Modul geschaffen werden.

Die Station kann als kompaktes Modul bereitgestellt werden, welches beispielsweise in bestehende Elemente und/oder Ladungsträger, insbesondere Paletten oder Europaletten, insbesondere aufweisend einen Einfahrtunnel bzw. Lichtraum bzw. Lichtraumtunnel, integriert werden kann. Die Station kann an einem Ladungsträger anbringbar ausgebildet sein. In anderen Worten, beispielsweise, kann die Station an einem Lichtraum bzw. Lichtraumtunnel angebracht, angehängt und/oder befestigt werden. Die Station kann auf einer Stellfläche oder Ladestationsfläche selbst angebracht werden. Insbesondere ist die Station hierzu ausgebildet. Somit kann nahezu nur die Fläche von Fördereinheiten selbst für die Station erforderlich sein, was sehr viel Platz einspart.

Denkbar ist, dass der Lichtraumtunnel, insbesondere Lichtraumtunnel eines Ladungsträgers, für die Station nicht (nur) durch eine Palette, sondern auch durch eine Halbpalette oder andere charakteristische Formen definiert werden kann. Die charakteristische Form sollte derart ausgeprägt sein, dass zwei oder mehr, insbesondere gegenüberliegende, Seiten eine Art Einfahrgang definieren können.

Die Station kann insbesondere freistehend aufstellbar ausgebildet sein. Die Station kann wenigstens abschnittsweise die Form eines Ladungsträgers mit einer Stellfläche aufweisen. Die Station kann ein Teil eines Ladungsträgers sein. Falls ein Ladungsträger bzw. eine Palette als Teil der Station verwendet wird, kann oberhalb der Station die volle Traglast abgelegt werden. Dies führt dazu, dass das Volumen oberhalb der Station anderweitig genutzt werden kann. Möglicherweise kann es als normaler Palettenstellplatz genutzt werden oder auch anderweitig, beispielsweise als begehbare Bürofläche genutzt werden. In fortgeschrittener Ausführungsform kann eine Station mit minimaler Tiefe realisiert werden, indem ein Modul der Station, insbesondere ein Lademodul, oberhalb einer Fördereinheit bzw. des Einfahrttunnels platziert wird.

Die Station kann als ein Schrank ausgebildet bzw. konzipiert sein. In diesem Fall wird ein kompaktes Modul mit höchstens 30 cm oder höchstens 20 cm Breite vorgeschlagen. Die Station kann eine Hebevorrichtung zum Anheben von einer Fördereinheit aufweisen. Insbesondere kann der Schrank oder auch Ladeschrank kann durch die Hebevorrichtung, welche die Fördereinheit auf die entsprechende Höhe anhebt, ergänzt sein. Durch dieses fortgeschrittene Konzept kann das notwendige Volumen zu Wartungs- und Ladestation auf ein Minimum reduziert werden.

Die Station kann als Modulwechselstation zum Wechsel von einem Energiespeicher einer Fördereinheit ausgebildet sein. Es kann ein entladener Energiespeicher einer Fördereinheit gegen einen geladenen Energiespeicher, stammend von der Station, gewechselt werden. So kann der entladene Energiespeicher wieder geladen werden, um später als geladener Energiespeicher wieder bereitzustehen.

Es ist denkbar, dass die Station von der Fördereinheit selbst transportiert werden kann. Entsprechend kann die Station ausgebildet sein. Somit kann vom Gesamtsystem lokal Platz geschaffen werden. Es ist keine stationäre Einrichtung des Parkplatzes notwendig und eine hochvariable Flächen- und Raumnutzung wird ermöglicht. In diesem Sinne wird die Station ebenfalls multifunktional, da Sie Teil einer variablen Flächennutzung wird.

Die Station kann ein Verbindungsmittel aufweisen, um mit einer oder mit mehreren Fördereinheiten verbunden und von dieser/diesen transportiert zu werden. Beispielsweise kann eine Fördereinheit sich an der Station einkoppeln bzw. zum Koppeln mit der Station ausgebildet sein, um diese zu transportieren.

Die Station kann eine Überwachungseinheit zum Überwachen des Zustands einer Fördereinheit aufweisen. Die Überwachungseinheit kann einen Sensor und/oder eine Kamera zum Erfassen der Fördereinheit aufweisen. Service und Wartung von Fördereinheiten wird bevorzugt zyklisch und/oder in festen Intervallen ausgeführt. Dieser Prozess bindet meist viel Zeit und Ressourcen vom Unternehmen und verursacht laufende Kosten im Unternehmen, wobei die Erfindung Abhilfe schaffen will. Die Station verfügt in besonders vorteilhafter Ausführung neben dem Laden und Reinigen von Fördereinheiten ebenfalls über die Überwachungseinheit und/oder Sensor(en) bzw. Kamera(s), welche den Systemzustand überwachen. Dies kann beispielsweise durch eine/die Kamera bzw. einen/den Sensor realisiert werden, welche die Form der Kufe bei Einfahren in die Station scannt. Dadurch können Dellen oder anderweitige Abweichungen erkennt und gemeldet werden. Idealerweise kann dadurch die zyklische Wartung vermieden und rein bei Bedarf gewartet werden. Somit kann die Station eine Systemüberwachungsaufgabe übernehmen, wessen Multifunktionalität erneut den Kundennutzen maximiert.

Ferner wird ein System mit der Station vorgeschlagen, die aufweist wenigstens eine Fördereinheit, und/oder einen insbesondere als Europalette ausgebildeten Ladungsträger aufweist. Die Station kann derart an dem Ladungsträger angeordnet sein, dass eine Fördereinheit durch einen Einfahrtunnel an einer Unterseite des Ladungsträgers zur Station, insbesondere einer/der Fördereinheitenaufnahme der Station, einfahren kann.

Nachfolgend wird die Erfindung anhand eines bevorzugten Ausführungsbeispiels unter Bezugnahme auf die Zeichnungen weiter im Detail erläutert.

In den Zeichnungen zeigen
- Fig. 1: eine Station und zwei Fördereinheiten in schematischer Draufsicht;
- Fig. 2: eine Station und zwei Fördereinheiten in perspektivischer Ansicht;
- Fig. 3: eine Fördereinheit in schematischer Draufsicht;
- Fig. 4: die Fördereinheit der Fig. 3 in schematischer Seitenansicht;
- Fig. 5: mehrere Ladegut tragende Stationen in perspektivischer Ansicht;
- Fig. 6: eine als Schrank ausgebildete Station in perspektivischer Ansicht; und
- Fig. 7: eine Station an einem Ladungsträger in perspektivischer Ansicht.

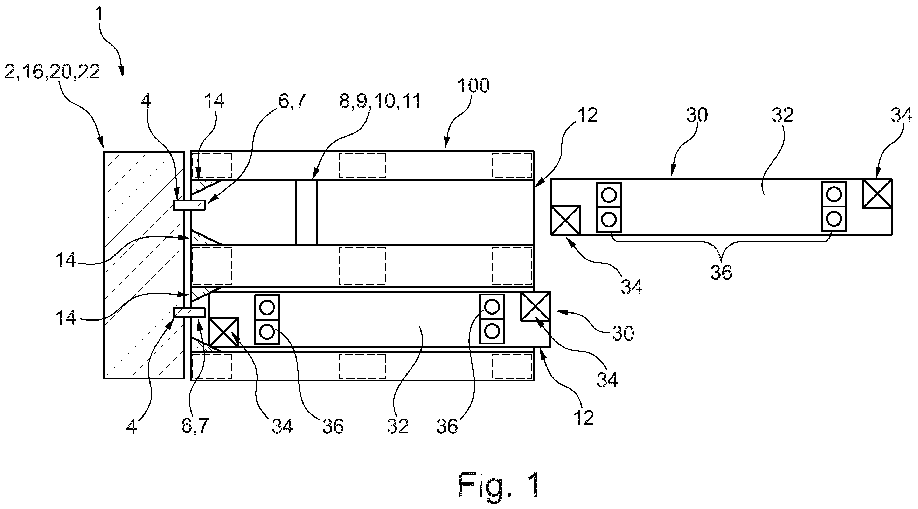

Fig. 1 zeigt ein System 1 mit einer Station 2, mit zwei autonom betreibbaren Fördereinheiten 30, und mit einem als Europalette ausgebildeten Ladungsträger 100, wobei die Station 2 derart an dem Ladungsträger 100 angeordnet ist, dass eine Fördereinheit 30 durch einen Einfahrtunnel 12 an einer Unterseite des Ladungsträgers 100 zur Station 2, insbesondere einer/der Fördereinheitenaufnahme 4 der Station 2, einfahren kann. Die Station 2 ist im Grunde zu Anbringung an einem/dem Ladungsträger 100 ausgebildet. Es kann verstanden werden, dass der Ladungsträger 100 Bestandteil der Station 2 ist. Die Fördereinheiten 30 sind zum Fördern von eine Stellfläche 102 für Ladegut 200 aufweisenden Ladungsträgern 100 ausgebildet. Eine Fördereinheit 30 ist an jeweils einer der Fördereinheitenaufnahme 4 angedockt und die andere Fördereinheit 30 befindet sich vor der Station 2. Die zwei Fördereinheiten 30 bilden ferner eine als Flurförderfahrzeug nutzbare Fördereinrichtung.

Die Station 2 weist eine Kontaktierungseinrichtung 6 mit einem beweglich gelagerten Magnetkontakt 7 zum Kontaktieren von Fördereinheiten 30 und eine für Fördereinheiten 30 vorgesehene Reinigungseinrichtung 8 auf. Die Station ist eine Ladestation zum kabelgebundenen Laden von Fördereinheiten 30. Ein Ladestrom und Daten können mittels der Kontaktierungseinrichtung 8 übertragen werden. Die Kontaktierungseinrichtung 6 ist als Lade- und/oder Diagnosestecker ausgebildet.

Die Reinigungseinrichtung 8 weist eine Drucklufteinheit 9 und optional eine Wischereinheit 10 und eine Bürsteinheit 11 auf. Die Reinigungseinrichtung 8 ist zur kontaktlosen oder auch kontaktierenden Reinigung von einem Sensor 34 und optional einer Fahrmechanik 36 der Fördereinheiten 30 ausgebildet. Die Reinigungseinrichtung 8 ist ferner zur Wärmeabfuhr von der Fördereinheit 30 mittels Druckluft bzw. einem Luftstrom ausgebildet, um Wärme vom Schnellladen abzuführen.

Ersichtlich weist die Station 2 einen zu der Fördereinheitenaufnahme 4 führenden Einfahrtunnel 12 auf. Die Reinigungseinrichtung 8 ist am/im Einfahrtunnel 12 angeordnet, um im Vorbeifahren einer Fördereinheit 30 diese zu reinigen. Die Reinigungseinrichtung 8 ist durch Einfahren der Fördereinheit 30 in den Einfahrtunnel 12 auslösbar. Die Station 2 weist eine Positioniereinrichtung 14 zum Positionieren einer in die Station 2 einfahrenden Fördereinheit 30 insbesondere quer zur Fahrtrichtung. Die Station 2 weist eine Recheneinheit 16 zur Kommunikation mit einer Fördereinheit 30 auf. Die Recheneinheit 16 kann Rechenoperationen zum Betrieb der Fördereinheiten 30 ausführen.

Außerdem weist die Station 2 ein Verbindungsmittel 20 auf, um mit den beiden Fördereinheiten 30 verbunden und von diesen transportiert zu werden. Wenn beide Fördereinheiten 30 in die Einfahrtunnel 12 eingefahren sind, können die Verbindungsmittel 20 einrasten oder einkuppeln, damit die Fördereinheiten 30 die Station 2 fördern können. In der Station 2 ist eine Überwachungseinheit 22 zum Überwachen des Zustands der Fördereinheiten 30 vorgesehen, aufweisend einen Sensor und eine Kamera zum Erfassen der Fördereinheit 30 bzw. deren Sensoren 34.

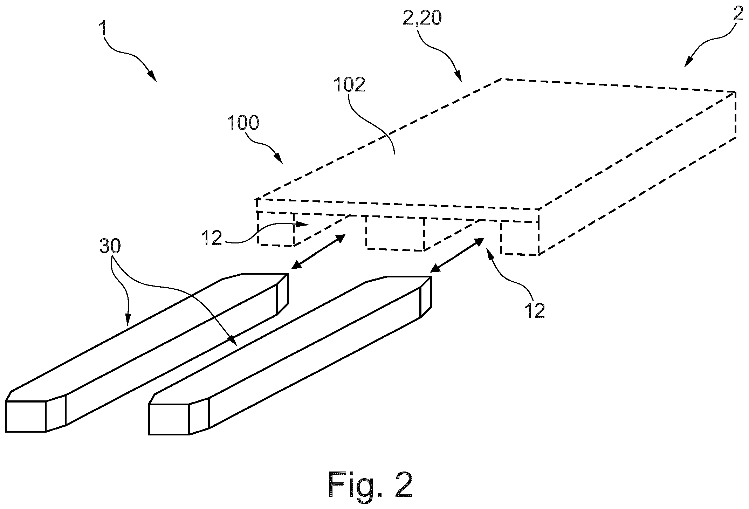

Mit Blick auf Fig. 2 ist ein System 1 aus einer Station 2 und zwei Fördereinheiten 30 dargestellt, wobei die Station 2 eine Ladestation ist, freistehend aufstellbar ausgebildet ist und die Form eines Ladungsträgers 100 mit einer Stellfläche 102 aufweist. Die Fördereinheiten 30 können beidseitig in zwei Einfahrtunnel 12 bzw. Lichtraumtunnel der Station 2 einfahren. Die Station 2 weist ein Verbindungsmittel 20 auf, um mit den beiden Fördereinheiten 30 verbunden und von diesen transportiert zu werden.

Die Fig. 1 und 2 zeigen jeweils eine zweiteilige Fördereinrichtung aus zwei physisch nicht miteinander verbundenen Fördereinheiten 30. Solche autonom betriebenen Fördereinrichtungen sind beispielsweise aus der DE 10 2007 046 868 A1 und der DE 10 2019 001 125 A1 bekannt. Gezeigt ist beispielsweise, wie die Fördereinheiten 30 in einem abgesenkten Zustand einen bzw. den Ladungsträger 100 (Transportpalette/"Europalette") unterfahren können, um den Ladungsträger 100 anschließend für den Transport anzuheben.

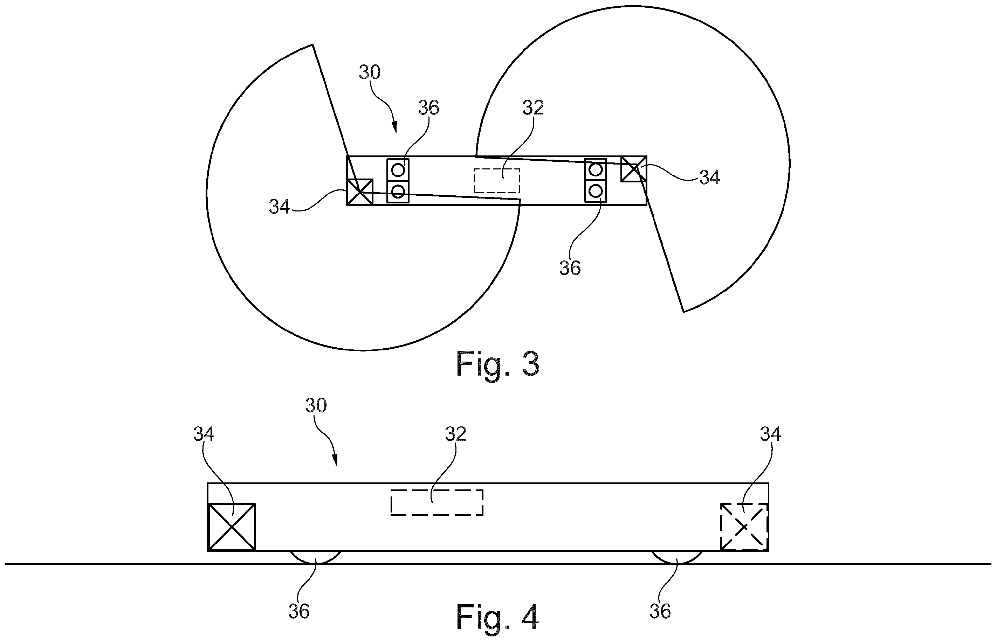

Mit Blick auf Fig. 3 und Fig. 4 ist eine Fördereinheit 30 gezeigt, wie sie bei der vorliegenden Erfindung betrachtet wird. Die Fördereinheit 30 ist langgestreckt ausgebildet. Die Fördereinheit 30 kann einen hier nicht gezeigten Ladungsträger unterfahren, diesen anheben und fördern, und diesen später wieder ablassen bzw. abstellen. Die Fördereinheit 30 weist einen Rahmen und eine Fahrmechanik mit Rollen oder Rädern auf. Oberseitig ist die Fördereinheit 30 im Wesentlichen flach ausgebildet. Ferner weist die Fördereinheit 30 beidseitig bzw. endseitig Sensoren 34 auf, um die Umgebung zu erfassen. Die Fördereinheit 30 weist einen Energiespeicher 32 in Form eines Akkumulators auf, mit dem die Fördereinheit 30 mit Energie versorgt wird. Über eine Station, die als Modulwechselstation zum Wechsel von einem Energiespeicher 22 einer Fördereinheit 30 ausgebildet ist, kann der Energiespeicher 32 geladen und/oder ausgetauscht werden.

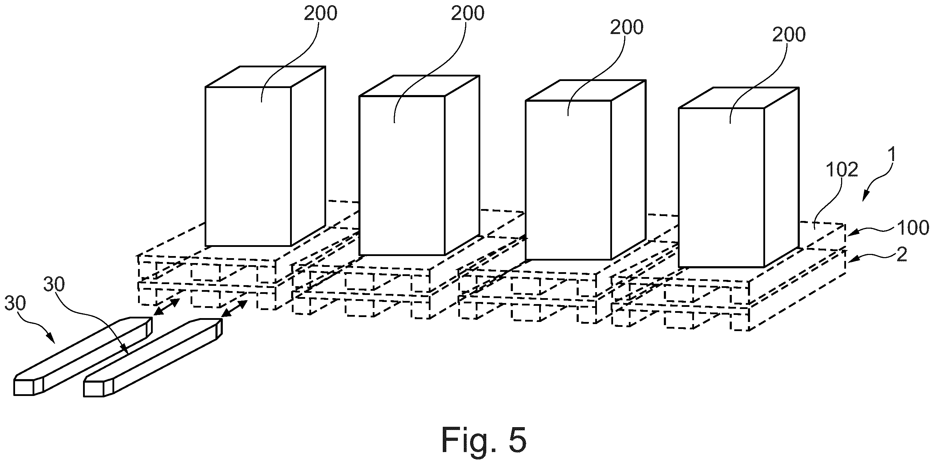

Mit Blick auf Fig. 5 sind zwei Fördereinheiten 30 sowie insgesamt vier als Ladestation ausgebildete Stationen 2 gezeigt. Auf jeder der Stationen 2 steht ein Ladungsträger 100. Insoweit kann eine jeweilige Station 2 als Stellfläche für Ladegut 200 verwendet werden, so dass im Grunde keine Stellfläche für die Station 2 verbraucht wird.

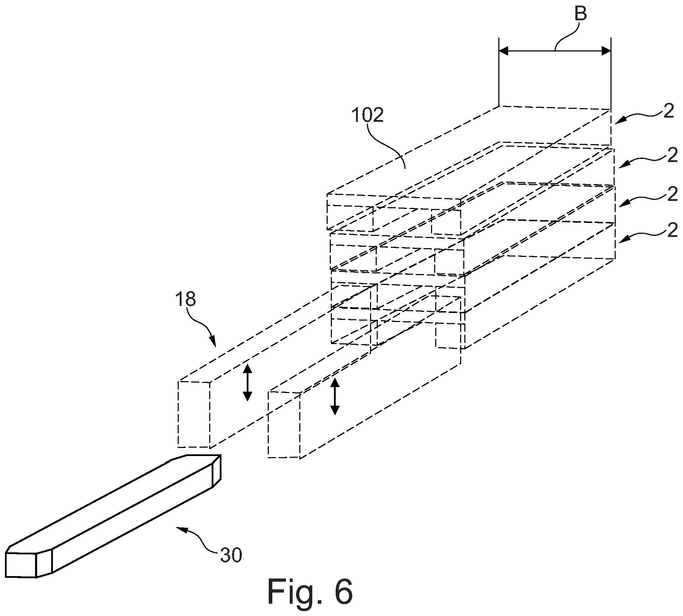

In Fig. 6 sind vier als Ladestation ausgebildete Stationen 2 gezeigt, die gestapelt sind, um einen Schrank zu bilden. Eine Hebevorrichtung 18 vor den Stationen 2 kann eine jeweilige Fördereinheit 30 auf die passende Höhe anheben und an die jeweilige Station 2 andocken, insbesondere in die Station 2 einschieben.

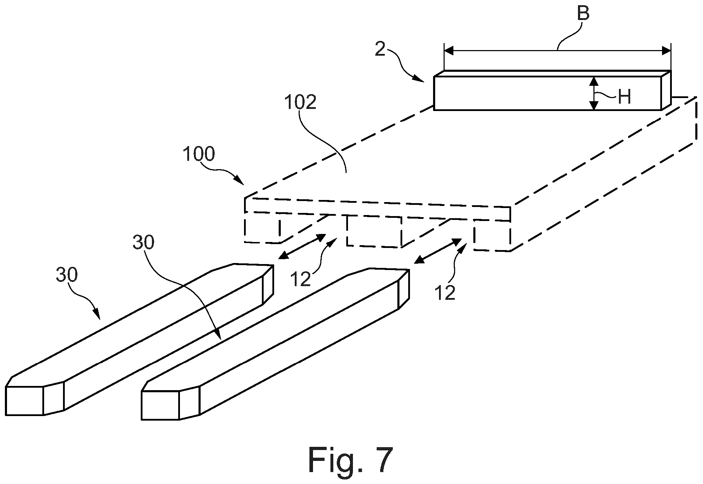

In Fig. 7 ist eine sehr kompakte Station 2 angegeben, die auf der Stellfläche 102 eines Ladungsträgers 100 platziert ist. Die Station 2 weist eine Bauhöhe H von höchstens 10 cm und eine Baubreite B von höchstens 20 cm auf, wobei darauf hinzuweisen ist, dass insbesondere die Fig. 7 nicht maßstabgetreu gezeichnet ist. Beispielsweise kann die Station 2 in einem Lichtraumtunnel integriert sein. Zwei Fördereinheiten 30 können in die Einfahrtunnel 12 bzw. Lichtraumtunnel einfahren und dann an der Station 2 andocken, zum Laden über ein Kontaktierungseinrichtung kontaktiert und zum Reinigen über eine Reinigungseinrichtung gereinigt werden.

### Bezugszeichenliste

- 1: System
- 2: Station
- 4: Fördereinheitenaufnahme
- 6: Kontaktierungseinrichtung
- 7: Magnetkontakt
- 8: Reinigungseinrichtung
- 9: Drucklufteinheit
- 10: Wischereinheit
- 11: Bürsteinheit
- 12: Einfahrtunnel
- 14: Positioniereinrichtung
- 16: Recheneinheit
- 18: Hebevorrichtung
- 20: Verbindungsmittel
- 22: Überwachungseinheit

- 30: Fördereinheit
- 32: Energiespeicher
- 34: Sensor
- 36: Fahrmechanik

- 100: Ladungsträger
- 102: Stellfläche

- 200: Ladegut

- H: Bauhöhe
- B: Baubreite

## Patentansprüche

1. Station (2) für Fördereinheiten (30) zum Fördern von eine Stellfläche (102) für Ladegut (200) aufweisenden Ladungsträgern (100), die Station (2) aufweisend
eine Kontaktierungseinrichtung (6) mit einem beweglich gelagerten Magnetkontakt (7) zum Kontaktieren einer Fördereinheit (30) und/oder eine für eine Fördereinheit (30) vorgesehene Reinigungseinrichtung (8).

2. Station (2) nach dem voranstehenden Anspruch, wobei die Station (2) eine Ladestation zum Laden von Fördereinheiten (30) ist, insbesondere wobei
ein Ladestrom mittels der Kontaktierungseinrichtung (6) übertragbar ist, und/oder
die Kontaktierungseinrichtung (6) zum insbesondere kabelgebundenen Laden und/oder Datentransfer, vorzugsweise als Lade- und/oder Diagnosestecker, ausgebildet ist.

3. Station (2) nach einem der voranstehenden Ansprüche, wobei die Reinigungseinrichtung (8) eine Drucklufteinheit (9), eine Wischereinheit (10) und/oder eine Bürsteinheit (11) aufweist.

4. Station (2) nach einem der voranstehenden Ansprüche, wobei die Reinigungseinrichtung (8)
zur kontaktlosen und/oder kontaktierenden Reinigung von einem Sensor (34) und/oder einer Fahrmechanik (36) einer Fördereinheit (30) ausgebildet ist, und/oder
zur Wärmeabfuhr von einer Fördereinheit (30), insbesondere mittels Druckluft und/oder einem Luftstrom, ausgebildet ist.

5. Station (2) nach einem der voranstehenden Ansprüche, aufweisend einen insbesondere zu einer Fördereinheitenaufnahme (4) der Station (2) führenden Einfahrtunnel (12) zum Einfahren einer Fördereinheit (30), insbesondere wobei die Reinigungseinrichtung (8) am Einfahrtunnel (12) angeordnet ist, bevorzugt um im Vorbeifahren einer Fördereinheit (30) diese zu reinigen.

6. Station (2) nach einem der voranstehenden Ansprüche, wobei die Reinigungseinrichtung (8) durch ein Einfahren einer Fördereinheit (30) in eine/die Fördereinheitenaufnahme (4) der Station (2) und/oder in den Einfahrtunnel (12) auslösbar ist.

7. Station (2) nach einem der voranstehenden Ansprüche, aufweisend eine Positioniereinrichtung (14) zum Positionieren einer in eine/die Fördereinheitenaufnahme (4) der Station (2) und/oder in den Einfahrtunnel (12) einfahrenden Fördereinheit (30).

8. Station (2) nach einem der voranstehenden Ansprüche, aufweisend eine Recheneinheit (16), die zur Kommunikation mit einer Fördereinheit (30), insbesondere über die Kontaktierungseinrichtung (6) und/oder über eine Funkverbindung, ausgebildet ist, insbesondere wobei die Recheneinheit (16) ausgebildet ist, Rechenoperationen zum Betrieb von Fördereinheiten (30) auszuführen.

9. Station (2) nach einem der voranstehenden Ansprüche, aufweisend eine Bauhöhe (H) von 20 cm oder 10 cm oder weniger und/oder eine Baubreite (B) von 30 cm oder 20 cm oder weniger.

10. Station (2) nach einem der voranstehenden Ansprüche, die
an einem Ladungsträger (100) anbringbar ausgebildet ist, oder
freistehend aufstellbar ausgebildet ist, insbesondere wenigstens abschnittsweise die Form eines Ladungsträgers (100) mit einer Stellfläche (102) aufweist.

11. Station (2) nach einem der voranstehenden Ansprüche, aufweisend eine Hebevorrichtung (18) zum Anheben von einer Fördereinheit (30).

12. Station (2) nach einem der voranstehenden Ansprüche, die als Modulwechselstation zum Wechsel von einem Energiespeicher (22) einer Fördereinheit (30) ausgebildet ist.

13. Station (2) nach einem der voranstehenden Ansprüche, aufweisend ein Verbindungsmittel (20), um mit einer oder mit mehreren Fördereinheiten (30) verbunden und von dieser/diesen transportiert zu werden.

14. Station (2) nach einem der voranstehenden Ansprüche, aufweisend eine Überwachungseinheit (22) zum Überwachen des Zustands einer Fördereinheit (30), insbesondere mit einem Sensor und/oder einer Kamera zum Erfassen der Fördereinheit (30).

15. System (1) mit einer Station (2) nach einem der voranstehenden Ansprüche, aufweisend
wenigstens eine Fördereinheit (30), und/oder
einen insbesondere als Europalette ausgebildeten Ladungsträger (100), insbesondere wobei die Station (2) derart an dem Ladungsträger (100) angeordnet ist, dass eine Fördereinheit (30) durch einen Einfahrtunnel (12) an einer Unterseite des Ladungsträgers (100) zur Station (2), insbesondere einer/der Fördereinheitenaufnahme (4) der Station (2), einfahren kann.
